# EUROPÄISCHE PATENTSCHRIFT

(11) **EP 3 825 093 B1**
(45) Veröffentlichungstag und Bekanntmachung des Hinweises auf die Patenterteilung: **21.08.2024**
(21) Anmeldenummer: 20208423.2
(22) Anmeldetag: 18.11.2020
(51) Int. Cl.: B29C 48/25, B29C 48/12, B29C 48/86

(54) **EXTRUSIONSDÜSE ZUR HERSTELLUNG EINES KUNSTSTOFFPROFILS**
EXTRUSION NOZZLE FOR PRODUCING A PLASTIC COMPONENT
BUSE D'EXTRUSION DESTINÉE À LA FABRICATION D'UN PROFILÉ EN MATIÈRE PLASTIQUE

(30) Priorität: 20.11.2019 AT 602632019
(43) Veröffentlichungstag der Anmeldung: 26.05.2021
(73) Patentinhaber: extrunet GmbH, 4653 Eberstalzell (AT)
(72) Erfinder: GRUBER, Dietmar, 4553 Schlierbach (AT); STADLHUBER, Thomas, 4810 Gmunden (AT)
(74) Vertreter: Babeluk, Michael

(56) Entgegenhaltungen:
- EP-A2- 1 023 983
- AT-B1- 519 313
- DE-A1- 102012 218 140
- US-A1- 2006 255 496
- BRAUNGER REINER: "Luftdüse - Balduf-Manz l 88447 Warthausen", HOMEPAGE, LUFTDÜSE, 2 August 2016 (2016-08-02), D - 88447 Warthausen, pages 1 - 2, XP093049048, Retrieved from the Internet <URL:https://web.archive.org/web/20160802213440/https://www.balduf.de/produkt/luftduese/> [retrieved on 20230524]

## Beschreibung

Die vorliegende Erfindung betrifft eine Extrusionsdüse zur Herstellung eines Kunststoffprofils gemäß dem Oberbegriff von Patentanspruch 1.

Beim Extrudieren von Fensterprofilen wird das Ausgangsmaterial (Dryblend) in einem Extruder aufbereitet, so dass eine homogene Schmelze entsteht, welche mit einem Druck von ca. 300 bar durch eine Extrusionsdüse gepresst wird. In der Extrusionsdüse nimmt die Schmelze etwa die Konturen des Profils an. In kurzem Abstand nach der Düse tritt der Profilstrang in die Trockenkalibrierung ein, durchwandert anschließend eine Nasskalibrierung. Die Längen der Trocken- und der Nasskalibrierung betragen in Abhängigkeit von der Profilwanddicke bei niedrigen Abzugsgeschwindigkeiten ca. 0,5 m und 6 m, und bei hohen Abzugsgeschwindigkeit bis zu 1 m und 18 m. Die Kalibrierung hat die Aufgabe, das Profil während des Abkühlvorganges zu stützen. Die genaue Geometrie der formgebenden Flächen der Kalibrierung hängt vom Schwindungsverhalten des Kunststoffes und von der Extrusionsgeschwindigkeit ab und ist entscheidend für maßhaltige Profile innerhalb der Toleranzen. Nach der Nasskalibrierung wird das nunmehr weitgehend erkaltete Profil vom Raupenabzug erfasst, welcher das Profil mit einer konstanten Geschwindigkeit durch die Kalibrierstrecke bis zur Säge bzw. dem Cutter transportiert. In der Sägeeinheit wird das endlos extrudierte Profil zu Profilstangen von üblicherweise 6 m Länge abgelängt, die anschließend in einem Ablagetisch abgelegt werden und von dort in einen Container ausgelagert werden.

Es ist bekannt, dass die Beaufschlagung von Luft auf die Profiloberfläche unmittelbar nach dem Verlassen der Extrusionsdüse deutliche Auswirkungen auf die Oberflächenqualität des Profils sowie auf das Einzugsverhalten in die erste Trockenkalibrierung hat. Der Abstand zwischen den Stirnflächen der Extrusionsdüse und der ersten Trockenkalibrierung beträgt üblicherweise ca. 6 mm bis 10 mm. Die heiße Schmelze quillt nach dem Verlassen der Extrusionsdüse etwas auf, d.h. die Wanddicken vergrößern sich, bevor diese wieder entsprechend der Abzugsgeschwindigkeit verringert werden. Das ist ein kritischer Vorgang insbesondere bei einwandigen, abstehenden Profilsektionen, sogenannten Extremitäten, weil diese auf beiden Seiten Kontakt zur Kalibrierung haben. Üblicherweise ist der Spalt am Beginn der Trockenkalibrierung um ca. 0,2 mm größer als die Wanddicke des fertigen Profils. Die Schmelze kann in der Übergangszone in diesen Profilsektionen kurzfristig dicker sein als beim abgekühlten Profil, so dass die Gefahr des Steckenbleibens besteht. Diese Übergangszone beginnt an der Düsenstirnseite und reicht noch bis zu 50 mm in die Kalibrierung hinein. Durch Anblasen mit kalter oder heißer Luft werden sowohl die Reibung der Schmelze gegen die Kalibratorwandung (bei kalter Blasluft), die Zugfestigkeit des Profilsegmentes durch Abkühlen der Randschicht (bei kalter Blasluft) als auch das Aufquellen der Schmelze in der Übergangszone (bei heißer Blasluft) verringert. Die heiße Blasluft bewirkt, dass die in der Randschicht der Schmelze vorhandenen, besonders hohen Eigenspannungen der Schmelze schneller relaxieren und daher die Quellung geringer ist. Durch Versuche ist festzustellen, welcher Effekt überwiegt, so dass das Einzugsverhalten in die erste Trockenkalibrierung optimiert werden kann.

Die EP 1 023 983 A zeigt, wie die Profiloberfläche nach dem Verlassen der Extrusionsdüse mit Luft beaufschlagt wird. Gezeigt wird, dass die Luftströmung auf vom Profil abstehende, einwandige Profilsektionen gerichtet ist. Ein Nachteil dieser Anordnung ist, dass die Bohrung für die Luft-Ausströmdüse direkt in die Düsenplatte eingearbeitet ist und daher nicht im Zuge des Abstimmens von Düse und Kalibrierung mit wenig Aufwand und flexibel bezüglich Strömungsgeschwindigkeit, Auftreffwinkel und genauer Auftreffposition veränderbar ist.

Die AT 519 313 A offenbart eine ähnliche Anordnung zur Beaufschlagung der Profiloberfläche mit Luft, wobei eine Düsenplatte im Austrittsbereich der Luft vorgesehen ist.

Die bekannten Vorrichtungen können grundsätzlich so eingerichtet werden, dass das Profil selektiv mit Luft zur Kühlung oder Erwärmung beaufschlagt wird, um die oben beschriebenen Probleme zu verringern. Es ist allerdings schwierig, im Fall von Umbauten der Extrusionsdüse oder der Extrusionslinie reproduzierbar die gleichen Bedingungen wiederherzustellen, da das Profil empfindlich auf Änderungen von Ort, Richtung und Intensität von Luftströmen reagiert. Überdies ist die Temperatur der Luft kritisch. Auch eine schnelle Anpassung an unterschiedliche Profilgeometrien ist nicht in befriedigender Weise möglich.

Bei beiden zitierten Patentschriften ist es schwierig und aufwendig, beim Abstimmen des Extrusionswerkzeuges den Luftstrom neu auszurichten und damit die Profilqualität zu optimieren und diese verbesserten Bedingungen exakt reproduzierbar festzulegen. Im ersten Fall muss die Extrusionslinie abgestellt und die Extrusionsdüse komplett zerlegt werden. Erst dann können vorhandene Luft-Ausströmdüsen verschlossen und neue Düsen gebohrt werden, oftmals müssen auch neue Zuleitungsbohrungen hergestellt werden. Im zweiten Fall, bei einer magnetischen Fixierung des Düsenkörpers an der Stirnfläche der Extrusionsdüse, könnten zwar Verschiebungen des Düsenkörpers vorgenommen werden, aber keine Änderungen des Auftreffwinkels. Außerdem kann die genaue Position des Düsenkörpers nicht sicher reproduzierbar festgelegt werden. Unbeabsichtigte Verschiebungen des Düsenkörpers, weil jemand an dessen Luftzuleitung gezerrt hat, könnten zu Ausschuss führen oder zu einer Produktionsunterbrechung. Zusätzlich stören jegliche aus der Düsenstirnfläche vorstehende Bauteile den üblichen Bedienungsablauf beim Abstimmen der Extrusionsdüse und bei der laufenden Extrusion.

Die DE 10 2010 040 984 A beschreibt eine Vorrichtung zur Behandlung mindestens einer Extrudatoberfläche eines Extrudats, die eine Luftdüsenvorrichtung aufweist, die entweder an der Extrusionsdüse oder am ersten Kalibrierwerkzeug oder dazwischen angeordnet werden kann. Eine reproduzierbare, einstellbare Ausrichtung der Ausströmung ist dabei nur schwer erreichbar. Überdies kann die an der Luftdüsenvorrichtung anzuschließende Versorgungsleitung den Zugang zu dem kritischen Abschnitt der Extrusionslinie behindern.

Aus der AT 519 313 B ist es bekannt, eine Düsenplatte im Bereich der Stirnseite der Extrusionsdüse anzuordnen, um die Profil in der Kalibrierung zu beeinflussen. Auch hier ergeben sich die oben beschriebenen Nachteile.

Aufgabe der vorliegenden Erfindung ist es, eine Extrusionsdüse der obigen Art so weiterzubilden, dass das extrudierte Profil flexibel und reproduzierbar mit Luft beaufschlagt werden kann, um so die Profilqualität zu optimieren. Insbesondere sollen einzelne Bereiche des Profilstrangs selektiv angeströmt werden können.

Erfindungsgemäß werden diese Aufgaben durch die Merkmale von Patentanspruch 1 gelöst.

Die erfindungsgemäße Lösung bietet den Vorteil, dass es möglich ist, eine Extrusionsdüse modular darzustellen, wobei eine standardisierte Ausnehmung verschiedene Luftdüsen-Einsätze aufnehmen kann, die den Umständen entsprechend angepasst sind. Falls erforderlich kann der Luftdüsen-Einsatz einfach und kostengünstig nachbearbeitet werden oder durch einen alternativen Luftdüsen-Einsatz ersetzt werden. Es wird dadurch auch gewährleistet, dass eine einmal optimierte Einstellung stets wieder exakt reproduziert werden kann, wenn zwischenzeitig ein Umbau der Extrusionsdüse oder der Extrusionslinie erforderlich war. Durch die Versorgung des Luftdüsen-Einsatzes durch die erste Düsenplatte hindurch kann eine Erschwerung des Zugangs zum Profil vermieden werden.

Insbesondere ist es günstig, wenn die Luft-Ausströmdüse auf einen Bereich des herzustellenden Profils gerichtet ist. Dieser Bereich kann je nach Erfordernis gekühlt oder erwärmt werden.

Eine besondere Flexibilität in der technischen Umsetzung wird dadurch erreicht, dass der Luftkanal mehrere Zufuhröffnungen zur Verbindung mit einer Luft-Zufuhrbohrung aufweist. Eine Extrusionsdüse ist ein komplexer Bauteil, der von Bohrungen für Passstifte, Schrauben und dgl. durchzogen ist. Es ist daher nicht immer möglich, in einem bestimmten Bereich eine Luft-Zufuhrbohrung anzubringen. Ein Luftdüsen-Einsatz weist mehrere Zufuhröffnungen auf, so dass dieser wahlweise in verschiedenen Extrusionsdüsen verwendet werden kann, die unterschiedliche Positionen für die Luft-Zufuhrbohrung benötigen.

Ein Aspekt der Erfindung sieht vor, dass die Luftzufuhr in eine Verteilkammer mündet. Aus dieser Verteilkammer gehen eine oder mehrere Luft-Ausströmdüsen ab, von denen jede individuell bzgl. genauer Position, Durchmesser und Winkelstellung gestaltet sein kann.

In einer weiteren Alternative weist der Luftdüsen-Einsatz an der Außenseite eine mit dem Luftkanal in Verbindung stehende Vertiefung bzw. Rinne auf. Damit ist es möglich, die Luft auch in dieser Vertiefung an der Außenseite des Luftdüsen-Einsatzes in der Ausnehmung zu führen, was die Variabilität bei schwierigen Platzverhältnissen weiter verbessert.

Die vorliegende Erfindung ermöglicht es, ein Extrusionsverfahren von Kunststoffprofilen mit einer Extrusionsdüse mit einem Fließkanal zum Ausformen eines Profils mit einer ersten Düsenplatte darzustellen, in der Ausnehmungen für die Aufnahme von Luftdüsen-Einsätzen vorgesehen sind, welche Luft-Ausströmdüse für die Blasluft aufweisen, wobei die Blasluft in einem Winkel zwischen 0° und 45° auf den aus der Extrusionsdüse austretenden Profilstrang gerichtet wird.

In der Folge wird die Erfindung anhand von Ausführungsbeispielen näher erläutert. Es zeigen:
- Fig.1a: eine erfindungsgemäße Extrusionsdüse mit 3 Luftdüsen-Einsätzen in einer Schrägansicht;
- Fig.1b: einen Ausschnitt der Extrusionsdüse von Fig. 1a in einer Stirnansicht
- Fig.1c: einen Ausschnitt der Extrusionsdüse von Fig. 1a, jedoch mit vereinfachter Kontur, in einer Schrägansicht;
- Fig.2: ein Detail aus Fig. 1c in Schnittdarstellung in der Mittelebene des Luftdüsen-Einsatzes in Schrägansicht;
- Fig.3: einen ersten erfindungsgemäßen Luftdüsen-Einsatz gemäß Fig. 1c in Schrägansicht;
- Fig.4: eine Schnittdarstellung des Luftdüsen-Einsatz gemäß Fig. 3 in Schrägansicht;
- Fig.5: eine weitere Schnittdarstellung des Luftdüsen-Einsatzes gemäß Fig. 3 in Schrägansicht;
- Fig.6: eine weitere Schnittdarstellung des Luftdüsen-Einsatzes gemäß Fig. 3 in Schrägansicht;
- Fig.7: einen zweiten erfindungsgemäßen Luftdüsen-Einsatz in Schrägansicht.

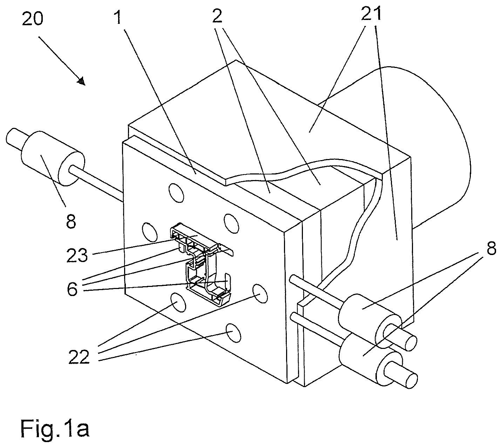

Fig. 1a zeigt allgemein eine Extrusionsdüse 20 mit einer ersten Düsenplatte 1 und einem Düsenkörper, welcher aus mehreren weiteren Düsenplatten 2 besteht. Diese Extrusionsdüse 20 wird mittels Heizplatten 21 beheizt. Sie ist für die Extrusion eines Flügelprofils 23 vorgesehen. Das Flügelprofil 23 weist drei Profilextremitäten auf, für welche drei Luftdüsen-Einsätze 6 in der Stirnfläche der ersten Düsenplatte 1 eingelassen sind. Jeder Luftdüsen-Einsatz 6 wird über Heizsonden 8 mit Blasluft beaufschlagt. Die in der ersten Düsenplatte 1 angeordneten Zufuhrbohrungen 11 für die Blasluft dürfen nicht mit der Verschraubung 22 oder anderen Einbauten kollidieren.

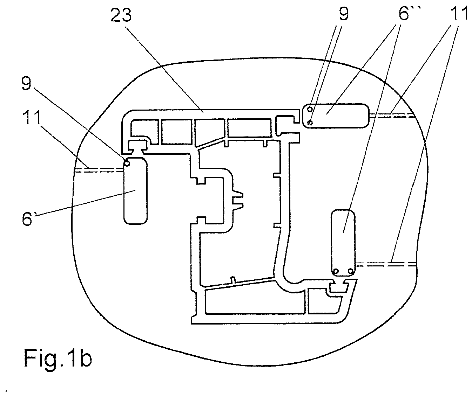

Fig. 1b zeigt einen Ausschnitt der Extrusionsdüse 20 von Fig. 1a in einer Stirnansicht. In die Luftdüsen-Einsätze 6, 6', 6" münden die Zuleitungsbohrungen 11 an unterschiedlichen Positionen. Der Luftdüsen-Einsatz 6' weist nur eine Luft-Ausströmdüse 9 auf, die Luftdüsen-Einsätze 6" je zwei Luft-Ausströmdüsen 9. Jede Luft-Ausströmdüse 9 lenkt die Luft an eine bestimmte Stelle des aus der Extrusionsdüse 20 austretenden Profilstranges 3 des Flügelprofils 23. Durch Austauschen oder Nachbearbeiten der Luftdüsen-Einsätze 6 kann der Luftstrahl mit wenig Aufwand an gewünschte Stellen des Profilstranges 3 gelenkt werden.

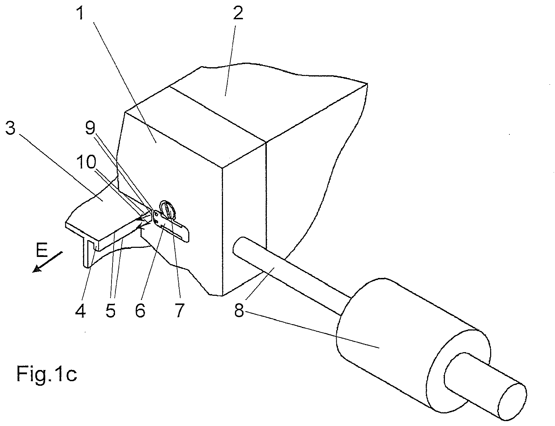

Fig. 1c zeigt im Detail den rechten oberen Eckbereich der Extrusionsdüse 20 in Schrägansicht gegen die Extrusionsrichtung E, wobei die Geometrie des Profilstranges 3 gegenüber dem Flügelprofil 23 und die Geometrie der ersten Düsenplatte 1 etwas verändert sind. Die erste Düsenplatte 1 schließt die Extrusionsdüse 20 in Extrusionsrichtung ab. Aus dieser ersten Düsenplatte 1 tritt der Profilstrang 3, dargestellt ist nur ein Teilbereich des Profilstranges 3, als Schmelze mit teigartiger Konsistenz in Extrusionsrichtung E aus. Das einwandige Profilsegment 4 steht vom Profilstrang 3 ab und ist hier hakenförmig ausgebildet. Der Luftdüsen-Einsatz 6 ist bündig in die Stirnfläche der Düsenplatte 1 eingelassen und mit der Senkkopfschraube 7 fixierbar. Über die Heizsonde 8 wird der Luftdüsen-Einsatz 6 mit Raumluft oder erhitzter Luft beaufschlagt. Mit den beiden Luft-Ausströmdüsen 9, die als Bohrungen im Luftdüsen-Einsatz 6 ausgebildet sind, wird das einwandige Profilsegment 4 an dessen Kanten 5 mit je einem Luftstrahl angeblasen, was durch zwei Pfeile 10 symbolisiert ist.

Die Intensität des Luftstrahls sowie dessen Temperatur können über eine Steuereinrichtung, auf die nicht näher eingegangen wird, in weiten Grenzen variiert werden. Die Strömungsgeschwindigkeit des Luftstrahls 10 ist variierbar, indem die Heizsonde 8 mit Druckluft mit unterschiedlichen Drücken im Bereich von 0 bar bis 4 bar beaufschlagt wird. Die Querschnitte und Längen der eigentlichen Luft-Ausströmdüse 9 sowie in der Zuleitung im Luftdüsen-Einsatz 6 und in der Düsenplatte 1 beschränken den Luftdurchsatz auf sinnvolle Werte, max. ca. 0,4 Nm³/min. Die Durchmesser in der Zuleitung werden bewusst "klein" gehalten, etwa von 0,8 mm bis 2 mm. Die Temperatur der Blasluft ist in einem Bereich von Raumtemperatur bis 600°C einstellbar. Falls erforderlich, kann die Blasluft auch gekühlt werden, wofür vorgesehen ist, die kalte Luft mit einem Kompressor aus einem Luft-Wärmetauscher, welcher auf bis zu -40°C gekühlt werden kann, anzusaugen.

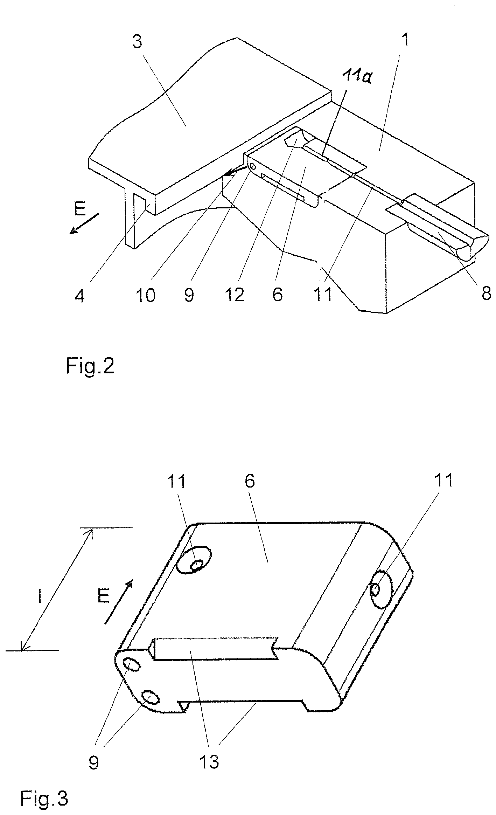

In Fig. 2 ist ein Detail aus Fig. 1c in Schnittdarstellung gezeigt. Die Blasluft wird von der Heizsonde in die 1. Düsenplatte 1 eingeleitet und über Zuleitungsbohrungen 11 bis zur Verteilkammer 12 geführt, welche im Luftdüsen-Einsatz 6 angeordnet ist. Die Zuleitungsbohrungen weisen einen kleinen Durchmesser auf, um einerseits den Durchsatz der Blasluft zu begrenzen und andererseits den Temperaturaustausch zwischen Blasluft und Düsenplatte gering zu halten. Das einwandige Profilsegment 4 wird kleinräumig durch einen Luftstrahl 10 beaufschlagt, welcher aus der Luft-Ausströmdüse 9 austritt. Diese Luft-Ausströmdüse 9 wird von der Verteilkammer 12 aus mit der Blasluft versorgt. Der Querschnitt der Luft-Ausströmdüse 9 sowie deren Winkelstellung zur Extrusionsrichtung E können in weiten Grenzen variiert werden: Bohrungsdurchmesser zwischen 0,8 mm und 3 mm sowie Winkel zwischen 0° und 45°, bevorzugt zwischen 10° und 25°, haben sich gut bewährt.

In Fig. 3 ist eine erste, nicht ausschließliche, erfindungsgemäße Ausführungsform des Luftdüsen-Einsatzes 6 (Ansicht schräg gegen die Extrusionsrichtung E) dargestellt. Der Luftdüsen-Einsatz 6 weist standardmäßig drei Zuleitungsbohrungen 11 auf: eine an der rechten Seite und je eine an der Ober- und Unterseite des Luftdüsen-Einsatzes (bezogen auf die Lage des Luftdüsen-Einsatzes in dieser Fig.). Das Ansenken der Zuleitungsbohrungen ist zweckmäßig, damit die Zuleitungsbohrung in der Düse bezüglich des Auftreffpunktes große Toleranzen aufweisen kann. Zwei Montageschrägen 13 dienen zur Fixierung des Luftdüsen-Einsatzes mit einer Senkkopfschraube 7. Diese Montageschrägen 13 erlauben viele unterschiedliche Positionen für die Senkkopfschraube 7, so dass Kollisionen mit anderen Konstruktionselementen sicher vermieden werden können. Nicht dargestellt ist ein "Abzugsgewinde", welches in der Stirnseite des Luftdüsen-Einsatzes 6, zwischen den beiden Montageschrägen, eingesenkt ist. Das Maß I für die Tiefe des Luftdüsen-Einsatzes 6 ist in weiten Grenzen frei wählbar, nach oben jedoch durch die Dicke der ersten Düsenplatte 1, abzüglich ca. 2 mm, begrenzt. Bewährt haben sich Tiefen zwischen 15 mm und 18 mm. Bis hierher entspricht die Beschreibung einer Grundform des Luftdüsen-Einsatzes, welche für nahezu alle Einsatzfälle einheitlich ausgeführt sein kann. Über die Grundform hinaus gehen lediglich die beiden Bohrungen, welche die Luft-Ausströmdüsen 9 bilden.

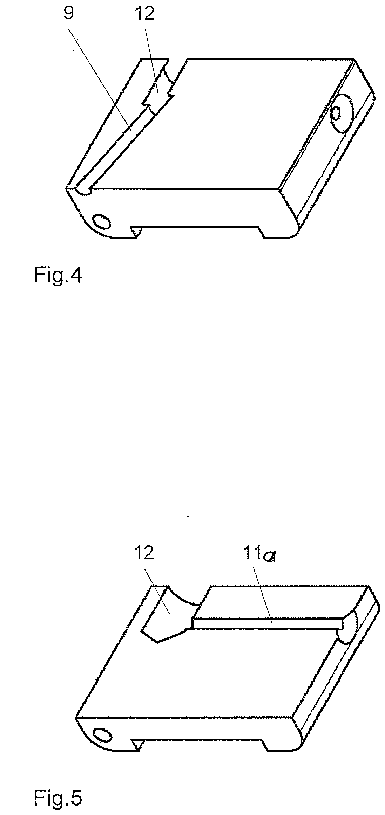

Die Fig. 4 zeigt eine Schnittansicht des Luftdüsen-Einsatzes 6 nach Fig. 3. Die Schnittebene liegt in Höhe der Bohrung für die obere Luft-Ausströmdüse 9. Die Ausströmdüse wird einlaufseitig aus der Verteilkammer 12 mit der Blasluft beaufschlagt. Die Bohrung weist einen Winkel von etwa 15° zur Extrusionsachse auf, so dass das Profilsegment 3 schräg angeströmt wird.

Die Fig. 5 zeigt eine weitere Schnittansicht des Luftdüsen-Einsatzes 6 nach Fig. 3. Die Schnittebene liegt in Höhe der Zuleitungsbohrung 11 für die Blasluft. Über diese Bohrung wird die Verteilkammer 12, welche hier als Sackbohrung ausgeführt ist, mit Blasluft versorgt.

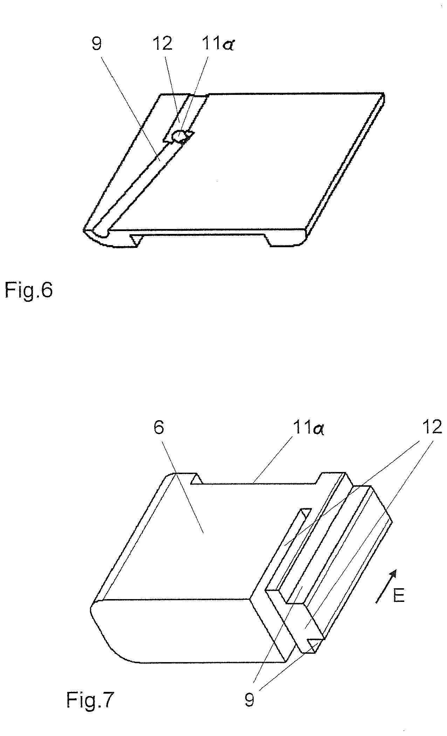

Die Fig. 6 zeigt eine weitere Schnittansicht des Luftdüsen-Einsatzes 6 nach Fig. 3. Die Schnittebene liegt in Höhe der Bohrung für die untere Luft-Ausströmdüse 9. Die Beschreibung stimmt mit jener zur Fig. 4 überein. Außerdem ist die unten vorgesehene Zuleitungsbohrung 11 für die Blasluft erkennbar.

Die Fig. 7 zeigt eine weitere Ausführungsform eines Luftdüsen-Einsatzes 6 in einer Schrägansicht (in Extrusionsrichtung E). Die Verteilkammer 12 für die Blasluft ist hier als Schlitz ausgeführt. Stromaufwärts, bezogen auf die Extrusionsrichtung, wird dieser Schlitz um die Kante, in Einbaulage Richtung Profilsegment 4, in der Fig. 7 also nach rechts, durch eine Abflachung weitergeführt. Die beiden Zuleitungsbohrungen 11, die in der ersten Ausführungsform nach Fig. 3 an der Ober- und Unterseite vorgesehen sind, können hier entfallen, da die Zuleitungsbohrung 11 der Düse in den Schlitz, der die Verteilkammer 12 bildet, einmündet. Diese Grundform hat den Vorteil, dass die Luft-Ausströmdüsen 9 sowohl als schräge Bohrung, als auch als rinnenförmiger Kanal am Außenumfang des Luftdüsen-Einsatzes 6 gefertigt werden können, welcher in Einbaulage durch die Wand der Aufnahmenut begrenzt wird. Derartige Kanäle können einfach mittels Handsäge oder Feile ohne Zuhilfenahme einer Maschine angefertigt und nachbearbeitet werden. Der Nachteil, dass der Luftstrahl 10 nunmehr parallel zur Extrusionsrichtung gerichtet ist, fällt kaum ins Gewicht, da die Ausströmdüse näher am Profilsegment 4 positioniert ist.

## Patentansprüche

1. Extrusionsdüse zur Herstellung eines Kunststoffprofils mit einer ersten Düsenplatte (1), die einen Fließkanal für das herzustellende Kunststoffprofil aufweist, wobei
in der ersten Düsenplatte (1) mindestens eine Ausnehmung vorgesehen ist,
wobei mindestens eine Luft-Zuleitungsbohrung (11) von einem Anschluss an der Außenseite der ersten Düsenplatte (1) in jede Ausnehmung führt, **dadurch gekennzeichnet, dass** in der mindestens einen Ausnehmung ein austauschbarer Luftdüsen-Einsatz aufgenommen ist, welcher einen Luftkanal mit mindestens einer Luft-Ausströmdüse aufweist, und dass
ein Luftkanal (11a) des Luftdüsen-Einsatzes (6) mehrere Zufuhröffnungen zur Verbindung mit der Luft-Zuleitungsbohrung (11) aufweist; und/oder dass
der Luftkanal (11a) mit einer Verteilkammer (12) verbunden ist; und/oder dass
der Luftdüsen-Einsatz (6) eine mit dem Luftkanal (11a) in Verbindung stehende Vertiefung aufweist, welche eine Luft-Ausströmdüse (9) bildet.

2. Extrusionsdüse nach Anspruch 1, **dadurch gekennzeichnet, dass** die Luft-Ausströmdüse (9) auf einen Bereich des herzustellenden Profilstrangs (3) gerichtet ist.

3. Extrusionsdüse nach einem der Ansprüche 1 oder 2, **dadurch gekennzeichnet, dass** der Luftdüsen-Einsatz (6) vollständig in der Ausnehmung aufgenommen ist.

## Claims

1. Extrusion die for producing a plastic profile with a first die plate (1), which has a flow channel for the plastic profile to be produced, wherein at least one recess is provided in the first die plate (1), wherein at least one air supply bore (11) leads into each recess from a connection on the outside of the first die plate (1), **characterised in that** an exchangeable air nozzle insert is accommodated in the at least one recess, which air nozzle insert has an air channel with at least one air outlet nozzle, and **in that**
an air channel (11a) of the air nozzle insert (6) has a plurality of supply openings for connection to the air supply bore (11); and/or **in that**
the air channel (11a) is connected to a distribution chamber (12); and/or **in that**
the air nozzle insert (6) comprises a recess communicating with the air channel (11a) and forming an air outlet nozzle (9).

2. Extrusion die according to claim 1, **characterised in that** the air outlet nozzle (9) is directed towards a region of the profile strand (3) to be produced.

3. Extrusion nozzle according to one of claims 1 or 2, **characterised in that** the air nozzle insert (6) is completely accommodated in the recess.

## Revendications

1. Buse d'extrusion pour fabriquer un profilé en matière plastique ayant une première plaque à buse (1) qui comporte un canal de passage pour le profilé en matière plastique à fabriquer,
* la première plaque de buse (1) ayant au moins un évidement,
* au moins un perçage d'alimentation en air (11) reliant un branchement sur le côté extérieur de la première plaque de buse (1) dans chaque évidement,
**caractérisée en ce que**
dans au moins un évidement il y a une garniture de buse d'air échangeable, qui comporte au moins une buse d'éjection d'air, et
un canal d'air (11a) de la garniture de buse d'air (6) comporte plusieurs orifices d'alimentation pour être reliés au perçage d'alimentation en air (11) ; et/ou
le canal d'air (11a) est relié à une chambre de distribution (12) ; et/ou l'insert de buse d'air (6) comporte une cavité en liaison avec le canal d'air (11a) et qui forme une buse d'éjection d'air (9).

2. Buse d'extrusion selon la revendication 1,
**caractérisée en ce que**
la buse d'éjection d'air (9) est orientée dans la zone de l'élément de profilé à réaliser (3).

3. Buse d'extrusion selon l'une des revendications 1 ou 2,
**caractérisée en ce que**
la garniture de buse d'air (6) est logée complètement dans l'évidement.
